# EUROPEAN PATENT APPLICATION

(11) **EP 3 940 599 A1**
(43) Date of publication of application: **19.01.2022**
(21) Application number: 20185744.8
(22) Date of filing: 14.07.2020
(51) Int. Cl.: G06N 3/04, G06N 5/02, B60M 3/00, B61L 27/00

(54) **FORECASTING AT LEAST ONE FEATURE TO BE FORECASTED**

(71) Applicant: Siemens Aktiengesellschaft, 80333 München (DE)
(72) Inventor: Joblin, Mitchell, 81825 München (DE); Spieckermann, Sigurd, 85630 Neukeferloh (DE); Yee, Dianna, 81825 München (DE)

(57) **Abstract**

The invention is directed to a computer-implemented method for forecasting at least one feature to be forecasted; comprising the steps:
a. Providing a train network (10), wherein the train network (10) represents a plurality of nodes (12) in a graph which are interconnected by respective edges (14); wherein each node (12) of the plurality of the nodes represents a train entity; wherein each edge (14) of the plurality of the edges represents a relationship between the train entities (S1); b. Providing an electrical grid (20), wherein the electrical grid (20) represents a plurality of nodes (22) in a graph which are interconnected by respective edges (24); wherein each node (22) of the plurality of the nodes represents an electrical entity; wherein each edge (24) of the plurality of the edges represents a relationship between the electrical entities (S2); c. Combining the train network (10) and the electrical grid (20) using a combined hybrid graph topology (30)(S3); d. Forecasting the respective at least one feature to be forecasted using a trained machine learning model based on the combined hybrid graph topology (30)(S4); and e. Providing the at least one forecasted feature (S5). Further, the invention relates to computing unit and a computer program product.

## Description

### 1. Technical field

The present invention relates to computer-implemented method for forecasting at least one feature to be forecasted. Further, the invention relates to a corresponding computing unit and a computer program product.

### 2. Prior art

Train networks are known from the prior art in context of the technical field mobility, referred to as mobility train networks. Thereby, a train network encompasses many variables which describe the state of the train network. Exemplary variables include the speed and the latency of all the trains of the train network, which is powered by a particular electrical circuit configuration of the train power network.

According to prior art, the train network state representation is modeled using extensive physics-based models. For example, the electrical load of the network is usually modeled using domain knowledge in electrical engineering. The simulation of the train network is used under different dynamics to determine the state of the train network.

However, such physics-based simulations are slow to compute and therefore infeasible for real-time decision-support for train operators. Additionally, the cost of power is harshly penalized if the train operating company surpasses their contractual power consumption limit.

It is therefore an objective of the present invention to provide a computer-implemented method for forecasting at least one feature to be forecasted in an efficient and reliable manner.

### 3. Summary of the invention

This problem is according to one aspect of the invention solved by computer-implemented method for forecasting at least one feature to be forecasted; comprising the steps:
a. Providing a train network; wherein
   the train network represents a plurality of nodes in a graph which are interconnected by respective edges; wherein
   each node of the plurality of the nodes represents a train entity; wherein
   each edge of the plurality of the edges represents a relationship between the train entities;
b. Providing an electrical grid; wherein the electrical grid represents a plurality of nodes in a graph which are interconnected by respective edges; wherein
   each node of the plurality of the nodes represents an electrical entity; wherein
   each edge of the plurality of the edges represents a relationship between the electrical entities;
c. Combining the train network and the electrical grid using a combined hybrid graph topology;
d. Forecasting the respective at least one feature to be forecasted using a trained machine learning model based on the combined hybrid graph topology; and
e. Providing the at least one forecasted feature.

Accordingly, the invention is directed to a method for forecasting at least one feature to be forecasted. The term forecasting can be equally referred to as predicting. The feature to be forecasted can depend on the underlying technical system, prediction task or any other conditions. The feature to be forecasted can be the load, preferably the electrical load and properties related to the electrical load.

Thereby, the electrical load refers to the power consumed by particular components or units of the electrical network. In other words, properties which are related to power are predicted. The power is a function of current, voltage, and time, such as current and voltage at a particular duration of time.

In the first steps a. and b., the input data sets are provided or received as input, namely the two distinct networks, the train network and the electrical grid. However, these networks cannot be processed directly as raw data by the machine learning algorithm in step d. Hence, these two networks are processed in step c. into a combined hybrid graph topology, accordingly processed data. The advantage of the combined hybrid graph topology lies in the fact that the graph is flexible enough to capture the complex relationships between the different physical entities within the electrical grid and the train network in a unifying data structure for machine learning. Preferably, the combined hybrid graph is a knowledge graph.

The combined hybrid graph serves as input data sets for the machine learning task and hence for forecasting the feature to be forecasted. Thereby, the machine learning model is a trained machine learning model during run-time. Thereby, any learning algorithm that can operate on the combined hybrid graph topology can be applied, preferably a graph convolutional network. Regarding the graph convolutional network, the graph structure itself is described in implementation with matrices, the more general term here would be tensors.

In the graph representation, the link structure can be represented as a rank 3 tensor for a multi-relational graph with at least two link type and the node features are matrices (i.e rank 2 tensors). The forecasted feature is provided as output data set in the last step.

The advantage of the present invention is that any features, preferably dynamic features, such as the aforementioned load can be estimated using machine learning in an efficient and reliable manner.

Thus, according one preferred use case, the configuration of the electrical switches can be adjusted, either manually or automatically based on the forecasted feature. For example, the electrical switches can be adjusted dynamically such that the electrical load satisfies a particular energy or power consumption requirement. For a particular configuration of electrical switches, the corresponding load can be forecasted. The forecasted load provides an estimate of the effect of the specified configuration of switches. For example, it would be useful to know whether the specified switch configuration exceeds the desired maximum power consumption.

In one aspect the train entity is an entity selected from the group comprising: a train, a track segment and a station. Stations can be connected to track segments. A particular route can be defined as a particular series connection of track segments and stations and direction of traversal. Trains can be connected to track segments or stations. Trains could be indirectly connected, if they travel on the same route or if they arrive at the same station from either the same or different routes.

In one aspect the electrical entity is an entity selected from the group comprising: an electrical switch, a feeder, a power production and an electrical line. The state of an electrical switch can determine whether a particular electrical line or feeder will carry electricity. When the switch state is on, electricity can flow through the switch and to any connected electrical lines, subsequently any connected feeders will be able to power its respective connected train segments.

In another aspect the combined hybrid graph is a knowledge graph. Accordingly, the combined hybrid graph can be designed as Knowledge graph, wherein the knowledge graph is a graph-structured database. The triplets are the elementary units of a knowledge graph. The triplet can be defined as subject-predicate-object, often denoted as (head, relation, tail), (s, p, o) or (h, r, t). Each triplet defines one connection between two entities in the knowledge graph. Knowledge graphs have proven to be advantageous as input data for machine learning tasks. Alternatively, other data representations or structures can be selected, including tabular formats and data matrices.

In another aspect the method further comprises the step of performing at least one action.

In another aspect the at least one action is selected from the group, comprising:
- Outputting the at least one forecasted feature and/or any other related data;
- Storing the at least one forecasted feature and/or any other related data;
- Displaying the at least one forecasted feature and/or any other related data;
- Transmitting the at least one forecasted feature and/or any other related data to a computing unit;
- Evaluating the at least one forecasted feature and/or any other related data;
- Adapting a pre-defined configuration of at least one electrical entity of the plurality of electrical entities of the electrical grid in accordance with the forecasted feature;
- Configuring at least one electrical entity of the plurality of electrical entities of the electrical grid in accordance with the forecasted feature;
- Adapting a pre-defined configuration of at least one train entity of the plurality of train entities of the train network in accordance with the forecasted feature; and/or
- Configuring at least one train entity of the plurality of train entities of the train network in accordance with the forecasted feature.

Accordingly, the input data, data of intermediate method steps and/or resulting output data can be further handled. The output data is in particular the forecasted feature or value. One or more actions can be performed. The action can be equally referred to as measure.

These actions can be performed by one or more technical units, such as computing unit or robot unit. In a preferred embodiment, the computing unit is part of an autonomous train and hence an autonomous unit. The actions can be performed gradually or simultaneously. Actions include e.g. storing and processing steps. The advantage is that appropriate actions can be performed in a timely manner.

According to one preferred use case, the entities within the electrical grid can be configured or the configuration adapted in an autonomous manner and in line or in accordance with the forecasted feature.

According to another use case, the entities within the (mobility) train network can be adjusted in an autonomous or manual matter in line or in accordance with the forecasted feature since the forecasted feature is dependent on the kinematics of the train, such as velocity and acceleration of the train, and the number of trains. For example, the electrical load can be reduced when using regenerative breaking technology and the acceleration of the moving train is reduced.

A further aspect of the invention is a computing unit e.g. robot unit or unit for an autonomous train.

The unit may be realized as any devices, or any means, for computing, in particular for executing a software, an app, or an algorithm. For example, the unit may consist of or comprise a central processing unit (CPU) and/or a memory operatively connected to the CPU. The unit may also comprise an array of CPUs, an array of graphical processing units (GPUs), at least one application-specific integrated circuit (ASIC), at least one field-programmable gate array, or any combination of the foregoing. The unit may comprise at least one module which in turn may comprise software and/or hardware. Some, or even all, modules of the unit may be implemented by a cloud computing platform.

A further aspect of the invention is a computer program product directly loadable into an internal memory of a computer, comprising software code portions for performing the steps according to the aforementioned method when said computer program product is running on a computer.

### 4. Short description of the drawings

In the following detailed description, presently preferred embodiments of the invention are further described with reference to the following figures:
- Fig. 1: illustrates a flowchart of the method according to the invention.
- Fig. 2: illustrates a schematic view of combining the train network and the electrical grid into a combined data matrix according to an embodiment of the invention.
- Fig. 3: illustrates a schematic view of combining the train network and the electrical grid into a combined hybrid graph according to an embodiment of the invention.
- Fig. 4: illustrates an alternative schematic view of combining the train network and the electrical grid into a combined hybrid graph according to an embodiment of the invention.
- Fig. 5: shows a schematic representation of forecasting the feature to be forecasted on the basis of one provided combined hybrid graph according to an embodiment of the invention.
- Fig. 6: shows a schematic representation of forecasting the feature to be forecasted on the basis of a plurality of provided combined hybrid graphs according to an embodiment of the invention.
- Fig. 7: shows a diagram of the training process according to an embodiment of the invention.

### 5. Detailed description of preferred embodiments

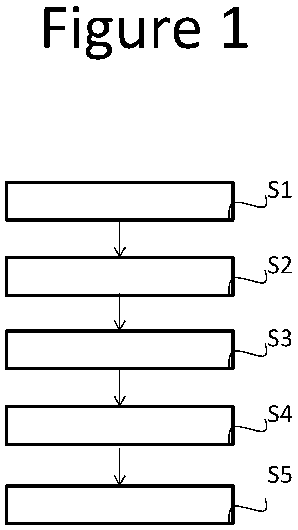

Fig. 1 illustrates a flowchart of the method according to the invention. The method for forecasting at least one feature to be forecasted, comprises the following steps S1 to S5:
In the first steps S1 and S2, the train network 10 and the electrical grid 20 are provided. The networks 10, 20 each comprise respective nodes 12, 22 representing entities and edges 14,24 representing the connections or relationships between the entities.

### Train network 10, also referred to as Train Track or train topology:

The train network comprises the information about how the track segments relate to the train stations. Thereby, the power requirements are essential. The power requirements fluctuate depending on where the trains are located on the track.

### Electrical grid 20, also referred to as electrical grid topology

The electrical grid comprises the information about how elements of the electrical grid are connected e.g. switches, feeders and electrical lines etc. Thereby, the power is essential. The power is delivered to trains through the grid and the flow depends on the switch configurations.

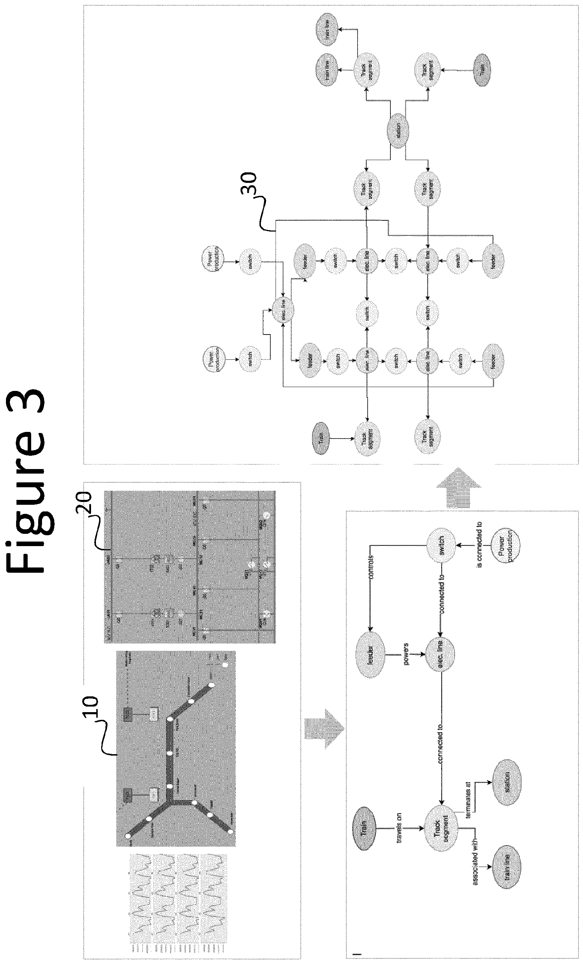

The train network 10 and the electrical grid 20 are processed into processed data which can be used by machined learning. According to Figure 3, the networks 10, 20 are combined into a combined hybrid graph topology 30, S3, which can be used as input data set for the forecasting. The combined hybrid graph topology 30, preferably an instance graph based on a defined data model, is shown in Figure 3. The graph structure advantageously provides a formal specification of how concepts are related so that the data can be fed to machine learning algorithms, preferably a graph convolutional network.

By using a graph structure, it is theoretically possible to train the graph convolutional network for multiple graphs of different electrical and train network structures. When the graph convolutional network is trained to be aware of different graph instances with different electrical and train network structures, the graph convolutional network is able to generalize to new electrical and train network structures which may not exist or seen within the training data. This is particularly advantageous for building or existing new mobility train and electrical networks, where it is difficult to estimate the power efficiency of a particular design given the particular electrical switch configuration.

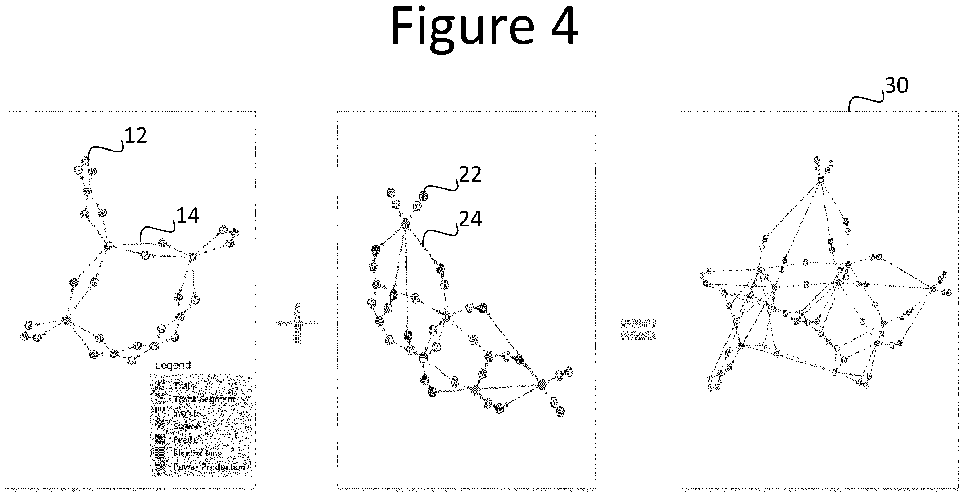

Fig. 4 shows an alternative schematic view of combining the train network and the electrical grid into a combined hybrid graph.

### Combined hybrid graph 30

The combined hybrid graph topology 30 is a combined graph that connects the electrical grid to the train track. This combination is important since it collectively represents the electrical flow and the track segments. The graph explicitly encodes which feeders are capable of powering which track segments.

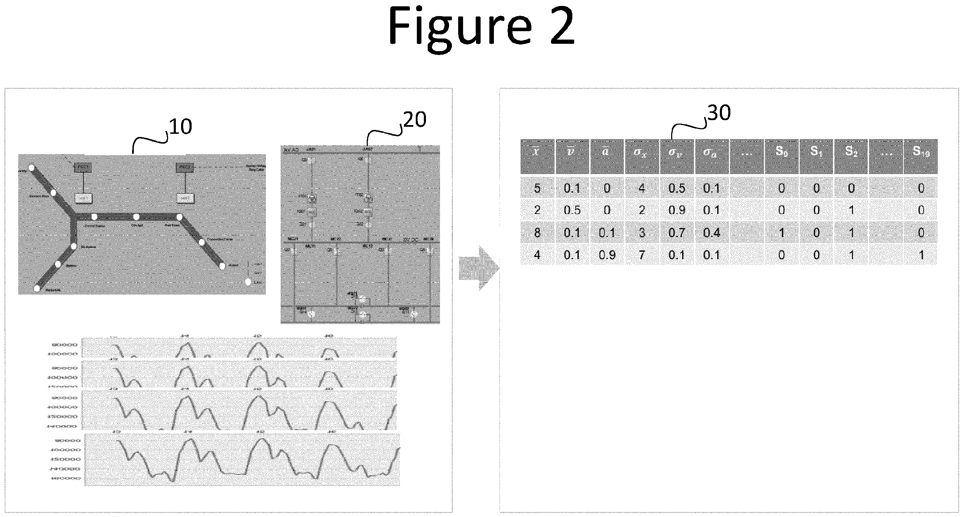

Alternatively, the networks can be processed into a data matrix, preferably a design matrix based on defined data representation. In other words, a representation of the data can be defined in form of a design matrix according to Figure 2. The advantage of this data representation is that it provides a formal specification of relevant features which can be fed to machine learning algorithms. For such non-graph-based approaches which only use one design matrix, it is assumed that the design matrix is of a fixed number of columns, where columns are input features, and the rows of the matrix are mutually independent observations. Objects which have an intrinsic network structure, such as the electrical network and train network, cannot be naturally expressed using a single design matrix.

In particular, the mobility train and electrical network are highly dynamic (i.e. variable number of trains are driving throughout the day, different cities have different mobility train and electrical network structures). The variability in the number of entities and link relations cannot be naturally described using a simple design matrix. In addition the entities of each network affect each other (i.e the switch configuration affects the load of trains), as the number of entities and link structures may vary, it is difficult or near impossible to design one design matrix which will generalize well for general application in mobility.

The graph-based approach is able to model such dependencies between the mobility train and electrical networks through the adjacency matrices (expressed as a rank 3 tensor) and features on the node (expressed as a rank 2 tensor i.e. matrix). The graph network is flexible to different mobility train and electrical network structures, which is modelled respectively in the adjacency matrices.

In steps S4 and S5, the respective feature to be forecasted is determined and provided. Therefore, a trained machine learning model is applied on the combined hybrid graph 30.

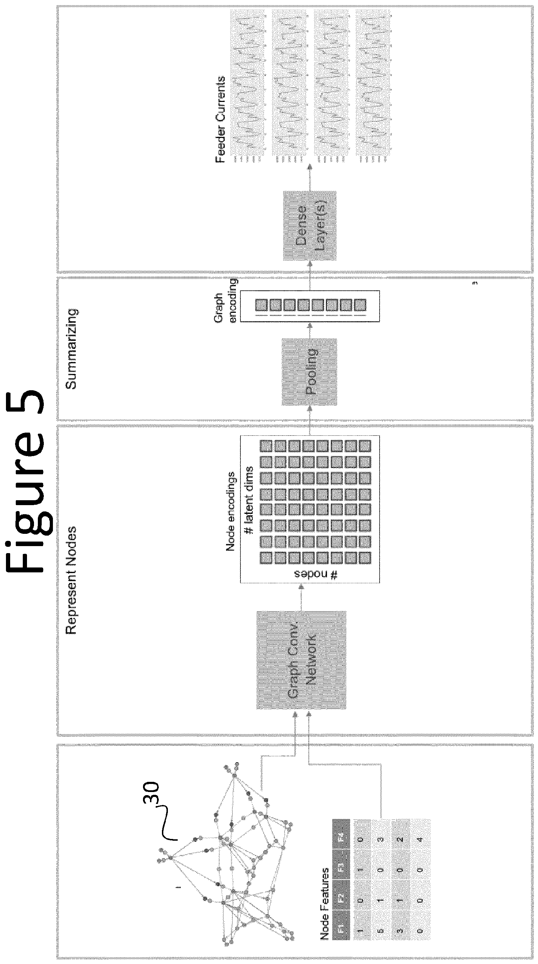

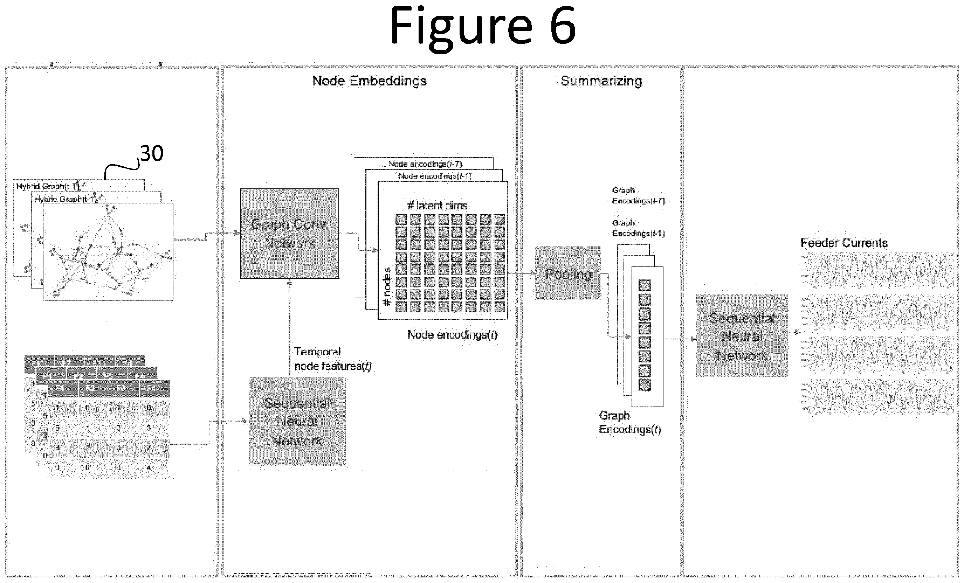

According to Figure 5 the general forecasting pipeline common to model training and inference can be split into the following steps (from left to right):
- The input data comprises the train network 10, electrical grid 20 and the node features e.g. switch states, train speed, etc.
- The machine learning model learns vector representations for all nodes which capture the structural identity of each node e.g., trains, switches, feeders etc. by encoding the adjacency information.
- The pooling operation compresses the node representations (which can be variable size) to a single encoding for the entire graph.
- In the final step the graph representation is transformed to predict the signals related to the electrical load such as feeder currents, total power consumption of the entire mobility network, etc.
- According to Figure 6 the general forecasting pipeline common to model training and inference can be split into four steps (from left to right):The input data comprises the train network 10, electrical grid 20 and the node features e.g. switch states, train speed, etc. at T different snapshots over time t.
- The graph conv. model learns vector representations for all nodes which capture the structural identity of each node (e.g., trains, switches, feeders etc.) by encoding adjacency information. At each time point, a graph conv is used to represent the node embeddings at a particular time. The sequential neural network learns vector representation of dynamic features on the node (e.g. speed, acceleration, distance to destination of train).
- The pooling operation compresses the node representations (which can be variable size) to a single encoding for the entire graph at a particular time.
- The sequential neural network learns vector representations of the temporal evolution of graph states which are useful for the prediction task. For example, the final step could be to transform the temporal-graph representation to predict the feeder currents of the train power network.

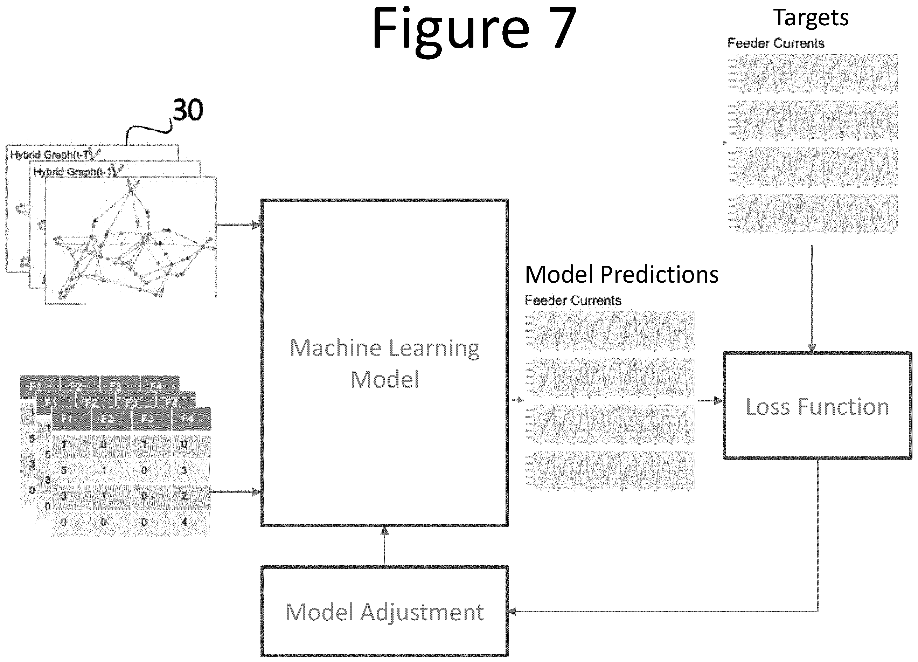

### Training the networks according to Figure 7

The networks can be trained from simulated data. The simulated data comprises of instance data i.e. switch configuration, sensor values for a particular electrical grid and train network, whose interactions are modelled using a particular electrical grid and train network topology.

Alternatively or additionally, the networks can be trained using real world data from existing transportation systems. The simulation is flexible to generate more data and different scenarios which may be difficult to produce in reality. Thus, a huge amount of training data can be generated with simulation. However, simulation has the disadvantage that it is potentially less realistic. Hence, the real world data is used to fine-tune (retrain) the models to perform better in real situations.

### Reference signs

- 10: train network
- 12: node
- 14: edge
- 20: electrical grid
- 22: node
- 24: edge
- 30: combined hybrid graph
- S1 to S5: Method steps 1 to 5

## Claims

1. Computer-implemented method for forecasting at least one feature to be forecasted; comprising the steps:
a. Providing a train network (10); wherein
the train network (10) represents a plurality of nodes (12) in a graph which are interconnected by respective edges (14); wherein
each node (12) of the plurality of the nodes represents a train entity; wherein
each edge (14) of the plurality of the edges represents a relationship between the train entities (S1) ;
b. Providing an electrical grid (20); wherein the electrical grid (20) represents a plurality of nodes (22) in a graph which are interconnected by respective edges (24); wherein
each node (22) of the plurality of the nodes represents an electrical entity; wherein
each edge (24) of the plurality of the edges represents a relationship between the electrical entities (S2);
c. Combining the train network (10) and the electrical grid (20) using a combined hybrid graph topology (30) (S3) ;
d. Forecasting the respective at least one feature to be forecasted using a trained machine learning model based on the combined hybrid graph topology (30) (S4) ; and
e. Providing the at least one forecasted feature (S5).

2. Computer-implemented according to claim 1, wherein the train entity is an entity selected from the group comprising: a train, a track segment and a station.

3. Computer-implemented according to any of the preceding claims, wherein the electrical entity is an entity selected from the group comprising: an electrical switch, a feeder, a power production and an electrical line.

4. Computer-implemented method according to any of the preceding claims, wherein the combined hybrid graph topology (30) is a knowledge graph.

5. Computer-implemented method according to any of the preceding claims, wherein the method further comprises the step of performing at least one action.

6. Computer-implemented method according to claim 5, wherein the at least one action is selected from the group, comprising:
- Outputting the at least one forecasted feature and/or any other related data;
- Storing the at least one forecasted feature and/or any other related data;
- Displaying the at least one forecasted feature and/or any other related data;
- Transmitting the at least one forecasted feature and/or any other related data to a computing unit;
- Evaluating the at least one forecasted feature and/or any other related data;
- Adapting a pre-defined configuration of at least one electrical entity of the plurality of electrical entities of the electrical grid (20) in accordance with the forecasted feature;
- Configuring at least one electrical entity of the plurality of electrical entities of the electrical grid (20) in accordance with the forecasted feature;
- Adapting a pre-defined configuration of at least one train entity of the plurality of train entities of the train network (10) in accordance with the forecasted feature; and/or
- Configuring at least one train entity of the plurality of train entities of the train network (10) in accordance with the forecasted feature.

7. A computing unit for performing the method steps according to any of the preceding claims.

8. A computer program product directly loadable into an internal memory of a computer, comprising software code portions for performing the steps according to any of the claims 1 to 6 when said computer program product is running on a computer.
